# EUROPÄISCHE PATENTANMELDUNG

(11) **EP 1 559 499 A1**
(43) Veröffentlichungstag der Anmeldung: **03.08.2005**
(21) Anmeldenummer: 04001723.8
(22) Anmeldetag: 27.01.2004
(51) Int. Cl.: B23P 6/00, F01D 5/28

(54) **Verfahren zur Reparatur eines Bauteils einer Strömungsmaschine**

(71) Anmelder: SIEMENS AKTIENGESELLSCHAFT, 80333 München (DE)
(72) Erfinder: Bublath, Boris, 13581 Berlin (DE); Heimberg, Beate, 45721 Haltern (DE); Hermann, Wolfgang, Dr., 45481 Mülheim (DE); Ott, Michael, Dr., 45478 Mülheim (DE)

(57) **Zusammenfassung**

Die vorliegende Erfindung betrifft ein Verfahren zur Reparatur eines beschädigten und/oder gealterten Bauteils einer Strömungsmaschine, welches zumindest teilweise aus einem keramischen Verbundwerkstoff gebildet ist.

Der vorliegenden Erfindung liegt die Aufgabe zugrunde, ein Verfahren bereitzustellen, welches ermöglicht, die durch beschädigte Bauteile verursachten Stillstandzeiten der Strömungsmaschine zu reduzieren sowie eine Möglichkeit zu schaffen, beschädigte Bauteile zu reparieren.

Als Lösung wird mit der Erfindung ein gattungsbildendes Verfahren zur Reparatur eines beschädigten Bauteils einer Strömungsmaschine aus einem keramischen Verbundwerkstoff vorgeschlagen, welches folgende Schritte umfasst: Auflösen der Fügung des Bauteils, Auslaugen der Matrix und/oder mechanisches Bearbeiten des Bauteils, Infiltration zur Wiederherstellung und/oder Erneuerung der keramischen Matrix des Bauteils und Wiederherstellen der Fügung.

## Beschreibung

Die vorliegende Erfindung betrifft ein Verfahren zur Reparatur eines beschädigten und/oder gealterten Bauteils einer Strömungsmaschine, welches zumindest teilweise aus einem keramischen Verbundwerkstoff gebildet ist.

Strömungsmaschinen, wie beispielsweise Dampf- oder Gasturbinen, Verdichter oder dergleichen, weisen insbesondere in ihrem Strömungskanal Bauteile auf, die während des Betriebs der Strömungsmaschine hohen physikalischen und chemischen Beanspruchungen ausgesetzt sind. Solche Bauteile sind insbesondere Leit- und Laufschaufeln, aber auch Wandelemente, welche den Strömungskanal bilden oder diesen auskleiden. Besonders bei Gasturbinen unterliegen die mit Heißgas beaufschlagten Bauteile während des bestimmungsgemäßen Betriebs einer Vielzahl von Einwirkungen wie durch korrosive Medien, durch oxidierende Atmosphäre, durch hohe Temperaturen oder auch durch Fremdkörper (FOD, foreign object damage). Dies kann dazu führen, dass Bauteile beschädigt werden bzw. einer Alterung unterliegen.

Für hohe Anforderungen an die Bauteile, wie beispielsweise bei Gasturbinen, ist es vorgesehen, dass diese Bauteile aus keramischen Verbundwerkstoffen hergestellt sind, die beispielsweise durch einen Verbund aus Keramik und Metall oder auch unterschiedlichen keramischen Werkstoffen gebildet sein können.Um den hohen Anforderungen beim Betrieb der Strömungsmaschine gerecht werden zu können und um einen hohen Wirkungsgrad erreichen zu können, werden im Stand der Technik in zunehmendem Maße Bauteile aus keramischen Verbundwerkstoffen, insbesondere Kombinationen unterschiedlicher keramischer Werkstoffe, verwendet. Zur Verbesserung des typischerweise spröden Bruchverhaltens wird in einen keramischen Werkstoff, den Matrixwerkstoff, ein weiteres Material mit einem von der Matrix abweichenden Gefüge eingelagert. Eine erhöhte Resistenz gegen äußere Einwirkungen kann erreicht werden, das heißt kleine Fehler im Material, wie beispielsweise bei der Herstellung oder durch Beanspruchung im Betrieb erzeugt, führen nicht unmittelbar zur Beschädigung des Bauteils. Bekannt ist, zur Verbesserung der Eigenschaften der Verbundwerkstoffe eine Partikelverstärkung, beispielsweise eine Whisker-Verstärkung, vorzusehen. Bei solchen Keramiken ist es jedoch erforderlich, sicherzustellen, dass die Kurzfasern bzw. Whisker während des bestimmungsgemäßen Betriebs in der Keramikmatrix gebunden bleiben, da diese aufgrund einer Lungengängigkeit einer hohen Gefahrenstoffklasse zugeordnet sind. Daher werden mittlerweile bevorzugt Langfasern verwendet, die als Glas oder auch Glaskeramik beispielsweise aus SiC, Al₂O₃, C, BN oder auch aus Si₃N₄ oder eine Kombination hiervon gebildet sind. Tritt nun eine Beschädigung an einem solchen Bauteil auf, so ist es bisher üblich, die Strömungsmaschine abzuschalten und das beschädigte Bauteil zu ersetzen. Andernfalls steht zu befürchten, dass das beschädigte Bauteil zu weiteren, größeren Schäden an der Strömungsmaschine führt, die einen enormen Reparaturaufwand sowie eine hohe Standzeit nach sich ziehen können.

Der Ersatz eines defekten Bauteils kann eine hohe Standzeit bewirken, insbesondere wenn das Bauteil nicht lagermäßig verfügbar ist. Darüber hinaus wird durch den Austausch in unerwünschter Weise erreicht, dass die Bauteile der Strömungsmaschine unterschiedliche Alterungszustände aufweisen. Bei einer folgenden routinemäßigen Wartung werden dann möglicherweise Bauelemente ausgetauscht, die einem nachfolgenden Betriebszyklus noch standhalten würden.

Der vorliegenden Erfindung liegt damit die Aufgabe zugrunde, ein Verfahren bereitzustellen, welches ermöglicht, die durch beschädigte Bauteile verursachten Stillstandzeiten der Strömungsmaschine zu reduzieren sowie eine Möglichkeit zu schaffen, beschädigte Bauteile zu reparieren.

Als Lösung wird mit der vorliegenden Erfindung ein Verfahren zur Reparatur eines beschädigten Bauteils einer Strömungsmaschine aus einem keramischen Verbundwerkstoff vorgeschlagen, welches folgende Schritte umfasst: Auflösen der Fügung des Bauteils, Auslaugen der Matrix und/oder mechanisches Bearbeiten des Bauteils, Infiltration zur Wiederherstellung und/oder Erneuerung der keramischen Matrix des Bauteils und Wiederherstellen der Fügung.

Mit der Erfindung wird erstmals die Möglichkeit geschaffen, ein Bauteil aus keramischem Verbundwerkstoff einer Strömungsmaschine zu reparieren, insbesondere auch Bauteile, die mit Heißgas beaufschlagt werden. So ermöglicht das Aufheben der Fügung ein Zerlegen des Bauteils, welches in Klebetechnik oder Sintertechnik gefügt wurde. Somit kann erreicht werden, dass der beschädigte Teil des Bauteils freigelegt wird und für die weitere Bearbeitung gut zugänglich zur Verfügung steht. In einem folgenden Schritt wird die Matrix des beschädigten Teils des zerlegten Bauteils ausgelaugt und/oder mechanisch bearbeitet. Mit dem Auslaugen kann bewirkt werden, dass betriebsbeanspruchte Teile der Matrix des keramischen Verbundwerkstoffs herausgelöst werden, ohne die Faserstruktur zu beschädigen. Das Auslaugen kann durch Einwirkungen eines fluiden Stoffs wie einem geeigneten Gas oder einer geeigneten Flüssigkeit erreicht werden. Darüber hinaus kann der beschädigte Bereich durch materialabhebende Bearbeitung bearbeitet werden, wie beispielsweise Schleifen, Fräsen oder dergleichen. So kann der beschädigte Bereich ausgemuldet werden, um so eine Grundlage für eine Reparatur zu bilden. In einem folgenden Schritt erfolgt die Infiltration zur Wiederherstellung und/oder Erneuerung der keramischen Matrix des Bauteils. So kann die keramische Matrix lokal wiederaufgebaut werden. Die Infiltration kann beispielsweise aus einer Gas- bzw. flüssigen Phase erfolgen. Die zu infiltrierende Stelle wird dazu einem geeigneten Fluid ausgesetzt. Es kann aber auch eine Polymerinfiltration durchgeführt werden, um den Schritt der Infiltration auszuführen. Abschließend wird das Bauteil durch Fügen wieder hergestellt. Das Wiederherstellen der Fügung kann direkt auch als Reparatur- oder Füllverfahren genutzt werden. Damit kann die Außenkontur des beschädigten Bauteils wieder hergestellt werden, um insbesondere seine strömungsdynamischen Eigenschaften zu gewährleisten. Besonders vorteilhaft erweist es sich, dass Ersatzbauteile, die in der Regel sehr kostenintensiv sind, nicht vorgehalten werden müssen. Die Logistik für Lagerhaltung und Beschaffung von Ersatzteilen kann reduziert werden. So ermöglicht das erfindungsgemäße Verfahren eine rasche und kostengünstige Wiederherstellung der Funktion der Strömungsmaschine, insbesondere außerhalb der vorgesehenen Wartungsintervalle, wodurch Stillstandzeiten aufgrund der Reparatur reduziert werden können.

In einer weiteren Ausgestaltung wird vorgeschlagen, dass das Bauteil nach dem Schritt des Auflösens der Fügung vor einer weiteren Bearbeitung entschichtet wird. Hierdurch wird vorteilhaft die Reparatur von lokalen Beschädigungen und/oder Abplatzungen eines Oxidations- oder Korrosionsschutzes ermöglicht. So kann beispielsweise das Entschichten vorgesehen sein, um den Bereich der Beschädigung des Bauteils einer Auslaugung und dem erneuten Einarbeiten der Matrix durch Polymerinfiltration und abschließende Pyrolyse zugänglich zu machen. Ferner können Beeinträchtigungen, insbesondere Behinderungen, durch die Beschichtung während der erfindungsgemäßen Reparatur des Bauteils vermieden werden.

In einer Weiterbildung der vorliegenden Erfindung wird vorgeschlagen, dass vor dem Schritt der Infiltration ein Einweben und/oder Wiederbeschichten der Fasern durchgeführt wird. Durch das Einfügen von einzelnen Fasern oder vorgefertigten Gewebeplatten wie Matten, Gitterstrukturen oder dergleichen kann eine den Verbundwerkstoff bildende Struktur wiederhergestellt werden. Darüber hinaus kann ein lokaler Wiederaufbau unter Erreichung verbesserter mechanischer Eigenschaften gegenüber der keramischen Matrix ermöglicht werden. Zusätzliche Stabilität kann gegenüber einem reinen Auffüllen ausschließlich mit keramischer Masse erreicht werden. Die Fasern, Matten oder Gitterstrukturen können aus einem nichtoxidischen Werkstoff wie Silziumcarbid, Kohlenstoff oder einem anderen keramischen, insbesondere oxidischen, Werkstoff gebildet sein.

Es wird ferner vorgeschlagen, dass das Bauteil vor dem Schritt der Wiederherstellung der Fügung gesintert wird. Das Sintern kann mittels bekannter Sinterverfahren wie Lasersintern, Plasmasintern oder dergleichen kostengünstig erreicht werden.

Um das Sintern im eingebauten Zustand des Bauteils in einer Gasturbine durchführen zu können, wird vorgeschlagen, die Gasturbine kurzzeitig zu überfeuern. Die Überfeuerung der Gasturbine ermöglicht ein Abbinden der keramischen Matrix am eingebauten Bauteil der Gasturbine. So kann das Sintern besonders vorteilhaft im eingebauten Zustand des Bauteils durchgeführt werden.

Darüber hinaus wird vorgeschlagen, dass das Bauteil vor dem Schritt der Wiederherstellung der Fügung beschichtet wird. So kann für das Bauteil eine Verlängerung des Oxidations- bzw. Korrosionsschutzes erreicht werden.

Ferner wird vorgeschlagen, dass nach dem Schritt der Wiederherstellung der Fügung ein Oberflächenschutz vorgesehen wird. Der Oberflächenschutz kann durch CVD, PVD oder Plasmaspritzverfahren ausgeführt werden. Vorteilhaft ist der Oberflächenschutz für das gesamte Bauteil vorgesehen und umfasst somit auch die Stellen, an denen das Bauteil gefügt ist. Eine hohe Zuverlässigkeit des Bauteils kann erreicht werden.

In einer weiteren Ausgestaltung wird vorgeschlagen, dass das Verfahren zur Reparatur eines beschädigten Bauteils einer Strömungsmaschine, welches zumindest teilweise aus einem keramischen Verbundwerkstoff gebildet ist, folgende Schritte umfasst: Auslaugen der Matrix und/oder mechanisches Bearbeiten des Bauteils, Infiltration zur Wiederherstellung und/oder Erneuerung der keramischen Matrix des Bauteils und Sintern des Bauteils. Gegenüber dem oben angeführten erfindungsgemäßen Verfahren zeichnet sich dieses Verfahren dadurch aus, dass es insbesondere zur Reparatur eines beschädigten Bauteils im eingebauten Zustand in der Strömungsmaschine geeignet ist. Neben den bereits genannten Vorteilen kann somit zudem der Aufwand für eine Montage weiter verringert werden.

Darüber hinaus wird vorgeschlagen, dass nach dem Schritt des Auslaugens der Matrix und vor dem Schritt der Infiltration ein Einweben und/oder Wiederbeschichten der Fasern durchgeführt wird. Auch bei diesem alternativen erfindungsgemäßen Verfahren kann eine Verbesserung der mechanischen Eigenschaften gegenüber der reinen keramischen Matrix erreicht werden. Darüber hinaus ermöglicht dieses Verfahren, dass eine bereits vorhandene Faserstruktur ebenfalls repariert werden kann.

Weitere Merkmale und Vorteile sind der folgenden Beschreibung von Ausführungsbeispielen zu entnehmen. Gleiche Bauteile und Verfahrensschritte werden mit gleichen Bezugszeichen bezeichnet. Die Ausführungsbeispiele dienen lediglich der Erläuterung der Erfindung und sollen diese nicht beschränken.

Es zeigen:
- Fig. 1: eine erste Ausgestaltung eines erfindungsgemäßen Verfahrens zur Reparatur eines durch Fremdkörpereinwirkung beschädigten in einer Gasturbine eingebauten Bauteils,
- Fig. 2: ein zweites erfindungsgemäßes Verfahren zur Reparatur eines in einer Gasturbine eingebauten Bauteils,
- Fig. 3: eine dritte Ausgestaltung eines erfindungsgemäßen Verfahrens zur Reparatur eines ausgebauten Bauteils einer Gasturbine,
- Fig. 4: ein weiteres erfindungsgemäßes Verfahren zur Reparatur eines ausgebauten Bauteils einer Gasturbine,
- Fig. 5: ein erfindungsgemäßes Verfahren zur Reparatur eines ausgebauten Bauteils einer Gasturbine mit Herstellung eines anschließenden Oberflächenschutzes,
- Fig. 6: ein Verfahren zur Reparatur eines Bauteils mit Beschichtung der Fasern und Oberflächenschutz,
- Fig. 7: eine Schemadarstellung einer Leitschaufel aus einem keramischen Verbundwerkstoff einer Gasturbine mit Beschädigungen und
- Fig. 8: einen vergrößerten Ausschnitt des Bereichs A aus Fig. 7.

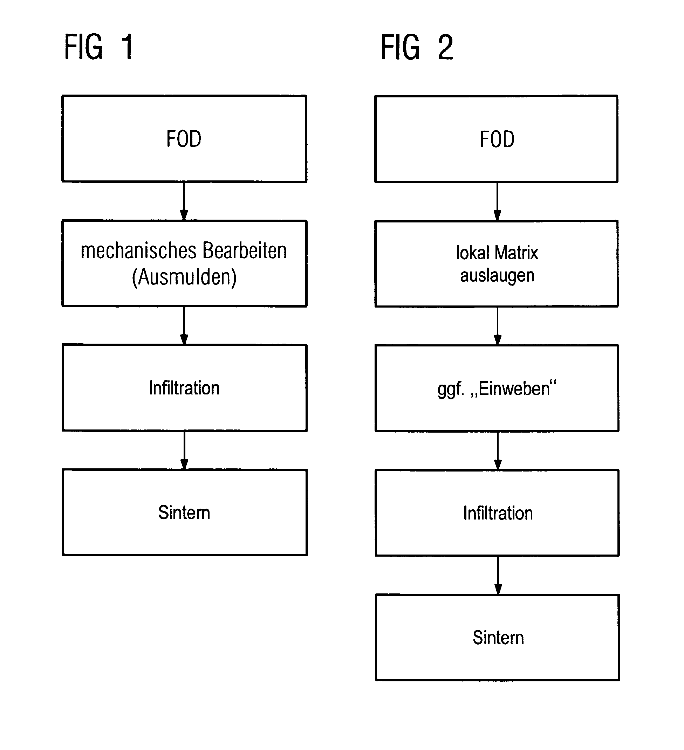

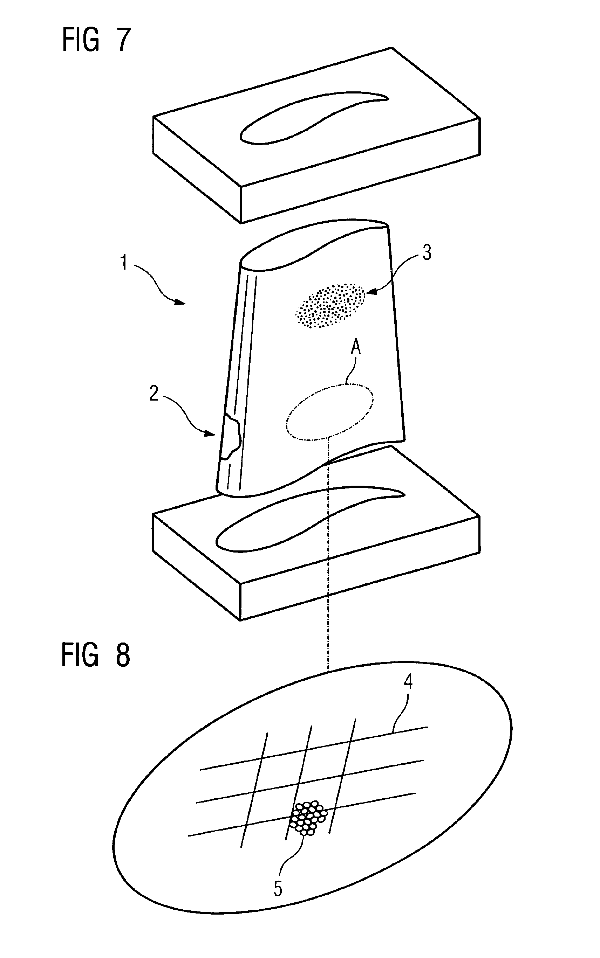

Fig. 1 zeigt ein erstes erfindungsgemäßes Verfahren zur Reparatur einer Leitschaufel 1 (Fig. 7) einer nicht näher dargestellten Gasturbine, die während des Betriebs in der Gasturbine beschädigt worden ist. Die hier vorliegende Leitschaufel 1 besteht aus einem keramischen Werkstoff wie beispielsweise Siliziumnitrit, Siliziumcarbid, Aluminiumoxid, Zirkoniumoxid, Molith, Glas, Glaskeramik und/oder dergleichen. Dieser Werkstoff wird üblicherweise Matrix genannt. Zur Verbesserung des spröden Bruchverhaltens ist in das Matrixmaterial eine Faserverstärkung eingebracht, die beispielsweise aus Glas, Glaskeramik, Siliziumcarbid, Siliziumnitrit oder dergleichen als auch einer Kombination hiervon bestehen kann, wodurch ein quasi plastisches Verformungsverhalten erzielt werden kann. Daneben besteht auch die Möglichkeit, anstelle oder zusätzlich der Fasern sogenannte Kurzfasern oder Whisker in die Matrix einzubringen. Aus Umweltschutzgründen ist jedoch die erste Ausführung bevorzugt. Mit derartigen Schaufeln ausgerüstete Gasturbinen erlauben eine hohe Einlasstemperatur in den Turbinenbereich von 1100° C bis zu 1350° C, wobei Wirkungsgrade von 31 %, 40 % oder darüber hinaus erreicht werden können.

Die Erhöhung der Bruchzähigkeit solcher Werkstoffe beruht ganz wesentlich auf dem Ablenken von Rissen aus ihrer Ausbreitungsrichtung an der Grenzfläche zwischen Matrix und Faser. Dabei wird Energie dissipiert und die weitere Rissausbildung reduziert. Wenn eine Faser reißt, wird sie durch eine Zugbelastung aus der Matrix herausgezogen, wodurch ebenfalls Energiedissipation auftritt. Dabei treten Spannungsumlagerungen auf, die wie bei einem Metall abgebaut werden können. Die Fasern können selbst eine Beschichtung aufweisen, beispielsweise aus Kohlenstoff oder Bornitrit. Als Faserwerkstoffe werden sowohl oxidische als auch nichtoxidische Fasern eingesetzt. Nicht-oxidische Fasern umfassen Kohlenstofffasern, Fasern aus Siliziumcarbid, Silziumnitrit und Bornitrit sowie SiBNC. Oxidische Fasern dagegen bestehen im wesentlichen aus Aluminiumoxid (Saphirfasern), Mullit (Al₂O₃ + SiO₂)und Zirkonoxid. Von der Firma Nippon Carbon oder Tyranno können beispielsweise die Fasern Hi-Nicalon und Hi-Nacalon S bezogen werden. Darüber hinaus sind Oxidfasern von der Firma 3M unter der Bezeichnung Nextel 610 und Nextel 720 erhältlich. Matrixwerkstoffe werden in der Regel nicht nur nach den verwendeten Werkstoffen sondern auch nach dem Herstellungsverfahren unterschieden, wobei als Werkstoffe beispielsweise Glas, Siliziumdioxid, Aluminiumoxid, Siliziumcarbid oder Siliziumnitrit zum Einsatz kommen.

Das Wandelement (nicht dargestellt) mit der beschädigten Leitschaufel 1 wird im vorliegenden Beispiel aus der Turbine ausgebaut und gemäß einem ersten Schritt, wie in Fig. 1 dargestellt, mechanisch bearbeitet bzw. ausgemuldet. Danach erfolgt durch die Infiltration oder den Pastenauftrag der lokale Wiederaufbau von keramischer Matrix. Anschließend wird der reparierte Bereich des Bauteils gesintert und das Wandelement mit der Leitschaufel 1 an seiner Stelle in der Turbine wieder eingebaut. Je nach Zugänglichkeit des Bauteils innerhalb der Turbine kann die Reparatur auch im eingebauten Zustand des Bauteils durchgeführt werden.

Gemäß Fig. 2 wird ein weiteres Verfahren vorgeschlagen, wobei lokal die Matrix des beschädigten Bauteils 1 in einem ersten Schritt ausgelaugt wird (Fig. 8). In einem weiteren Schritt werden die Fasern eingefügt, wodurch verbesserte mechanische Eigenschaften gegenüber der keramischen Matrix 5 erreicht werden können. Anschließend erfolgen die Schritte Infiltration und Sintern wie im vorherigen Beispiel zu Fig. 1.

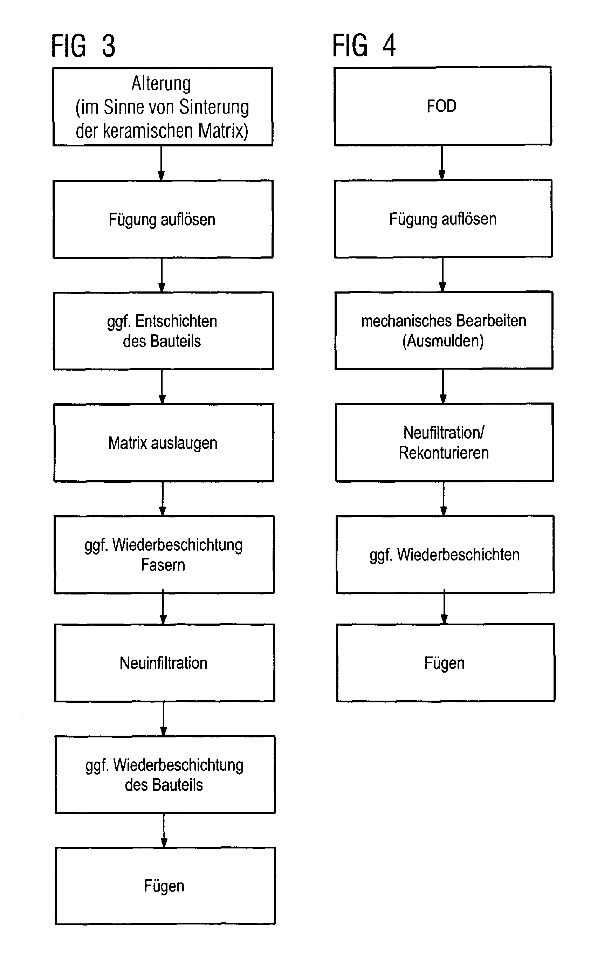

Fig. 3 zeigt ein Verfahren zur Behebung eines Alterungseffekts der Leitschaufel 1, der infolge einer Sinterung der keramischen Matrix an der Leitschaufel 1 aufgetreten ist. Um diese Beschädigung zu beheben, wird in einem ersten Schritt die Fügung aufgelöst und anschließend die Leitschaufel 1 entschichtet.

Üblicherweise bildet die Beschichtung 3 des Bauteils eine Schutzschicht, die je nach Anwendungsfall Aluminium, Silizium und/oder Chrom aufweist. Diese Schutzschicht bildet an ihrer Schichtoberfläche zum Strömungskanal eine protektive Oxidhaut, wodurch der darunter liegende Werkstoff vor weiteren oxidativen Angriffen geschützt ist. Mit zunehmender Betriebsdauer diffundiert Sauerstoff aus dem Strömungskanal durch die Schutzschicht hindurch und führt so zu einer Zunahme der Dicke der Oxidhaut. Am Ende erreicht der Sauerstoff den darunter liegenden Werkstoff. Die Oxidhaut platzt auf oder reißt ab aufgrund thermisch und mechanisch induzierter Spannungen, wobei die Schicht lokal wieder erneuert wird. Ist die Schutzschicht an den oben genannten Elementen verarmt, diffundiert der Sauerstoff in das Bauteil hinein. Die hierbei entstehenden Oxide weisen nur eine geringe schützende Eigenschaft auf, was zu einer massiven Bauteilschädigung mit Rissbildung führt.

Diese Beschichtung 3 wird vor dem nächsten Schritt entfernt. Danach wird die vorhandene Matrix 5 ausgelaugt und es erfolgt eine Wiederbeschichtung der Fasern. Anschließend wird durch Neuinfiltration der lokale Aufbau von keramischer Matrix 5 durchgeführt. Danach wird die Leitschaufel 1 wiederbeschichtet und abschließend die Fügung wieder hergestellt.

Zur Wiederherstellung der Beschichtung kann beispielsweise eine Diffusionsschicht erzeugt und/oder eine Überzugs- bzw. Auflageschicht aufgebracht werden. Bei der Erzeugung der Diffusionsschichten durch CVD-Verfahren (CVD ist gleich Chemical Vapour Deposition, Chemische Abscheidung aus der Gasphase) werden Aluminium- und Chromgehalte in den oberflächennahen Bereichen des Bauteils erhöht. Üblicherweise wird hierzu das "Packcementation"-Verfahren angewandt, bei dem die Bauteile bei einer Temperatur von ca. 700 bis 1100° C, vorzugsweise bei einer Temperatur von 800 bis 1050° C, unter inerter oder reduzierender Atmosphäre mit Pulvern umgeben werden, in denen die erforderlichen Elemente angereichert sind. Durch den Aluminiumgehalt im Pulver kann gesteuert werden, ob eine Aluminiumdiffusion in das Bauteil hinein (High Activity Process) oder eine Nickeldiffusion aus dem Bauteil heraus in das Pulver (Low Activity Process) stattfindet. Im Hinblick auf den Heißgaskorrosionsschutz können Varianten der reinen Aluminid-(Alitier-)Schichten verwendet werden, wie beispielsweise mit Platin modifizierten Aluminidschichten. Das Diffusionsverfahren kann für eine Schichtdicke vorzugsweise bis zu 100 µm eingesetzt werden, während Auflageschichten sowohl dicker als auch komplexer zusammengesetzt abscheidbar sind. Das Aufbringen einer Auflageschicht wird dagegen mittels thermischer Spritzverfahren oder dem PVD-Verfahren (PVD ist gleich Plasma Vapour Deposition) durchgeführt. Insbesondere für die Verwendung in Gasturbinen sind Legierungen des Typs "MCrAlX" im Einsatz, die bei guter Abstimmung auf den Betriebszustand über mehrere 1000 Stunden den Aufbau einer dichten, passivierenden Oxidhaut gewährleisten. M steht für Matrixelemente wie beispielsweise Nickel, Cobalt, Eisen oder dergleichen sowie eine Kombination dieser Elemente. Zur Deckschichtbildung werden vorzugsweise Chrom, Aluminium oder dergleichen verwendet. X steht für Aktivelemente wie Yttrium, Hafnium, Zirkonium und/oder Ytterbium oder dergleichen. Zur Erhöhung der Aktivität der Deckschichtbildner kann zudem noch Silizium zugesetzt werden. Eine weitere Zugabe von Rhenium reduziert die Oxidationsrate und verbessert gleichzeitig das thermomechanische Verhalten des Systems.

Fig. 4 zeigt einen weiteren erfindungsgemäßen Verfahrensablauf, bei dem zur Reparatur einer mechanischen Beschädigung 2 der Leitschaufel 1 zunächst die Fügung aufgelöst wird, und anschließend durch Schleifen die beschädigte Stelle mechanisch ausgemuldet wird. Im folgenden Schritt wird durch Neuinfiltration bzw. Rekonturieren die ursprüngliche Form der Leitschaufel 1 wiederhergestellt. Danach wird die Leitschaufel 1 beschichtet und abschließend wieder gefügt.

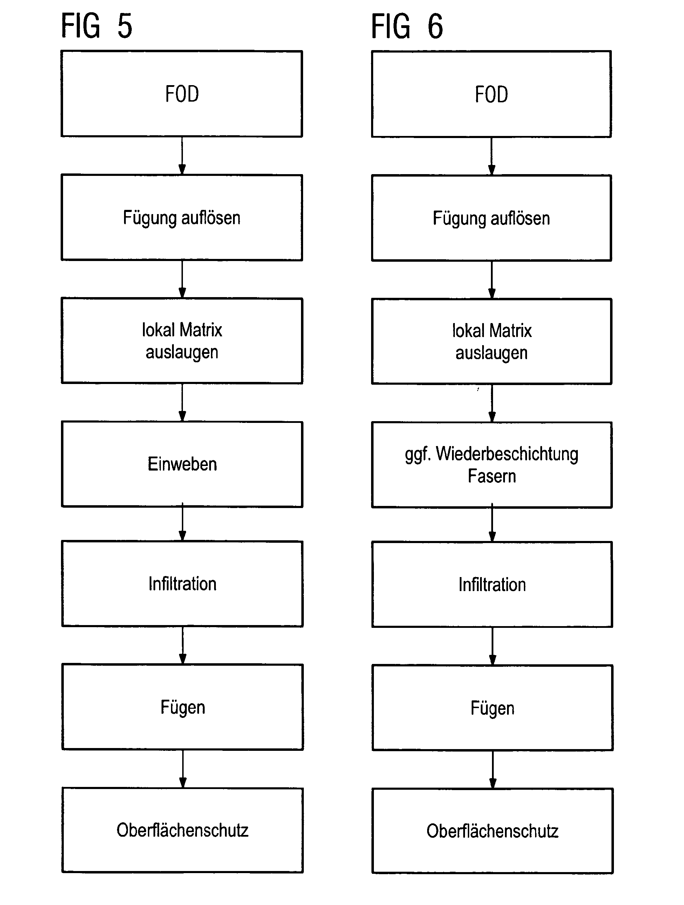

In Fig. 5 ist ein Verfahrensablauf zur Reparatur einer Leitschaufel 1 dargestellt, die durch Fremdkörpereinwirkung (FOD, foreign object damage) beschädigt ist. Zunächst wird in einem ersten Verfahrensschritt die Fügung aufgelöst und in einem nachfolgenden Verfahrensschritt die Matrix 5 an den betroffenen Stellen ausgelaugt. Danach werden einzelne Keramikfasern 4 an den betroffenen Stellen eingewebt. Die Fasern 4 sind vorliegend aus einem Keramikwerkstoff gebildet. Anschließend wird durch Infiltration der lokale Wiederaufbau von keramischer Matrix 5 durchgeführt. Danach wird die Leitschaufel 1 gefügt und ein Oberflächenschutz auf der Leitschaufel 1 aufgebracht.

Ein weiterer erfindungsgemäßer Verfahrensablauf ist in Fig. 6 dargestellt, bei dem im Unterschied zu dem in Fig. 5 dargestellten Verfahrensablauf eine Wiederbeschichtung der Fasern vorgesehen ist.

Die Ausführungsbeispiele sollen lediglich die Erfindung erläutern und diese nicht beschränken. Weitere Kombinationen von Verfahrensschritten können vom Fachmann durchgeführt werden, ohne den Schutzbereich dieser Erfindung zu verlassen.

## Patentansprüche

1. Verfahren zur Reparatur eines beschädigten und/oder gealterten Bauteils einer Strömungsmaschine, welches zumindest teilweise aus einem keramischen Verbundwerkstoff gebildet ist, mit den Schritten:
Auflösen der Fügung des Bauteils,
Auslaugen der Matrix und/oder mechanisches Bearbeiten des Bauteils,
Infiltration zur Wiederherstellung und/oder Erneuerung der keramischen Matrix des Bauteils und Wiederherstellen der Fügung.

2. Verfahren nach Anspruch 1,
**dadurch gekennzeichnet,**
**dass** das Bauteil nach dem Schritt des Auflösens der Fügung vor einer weiteren Bearbeitung entschichtet wird.

3. Verfahren nach Anspruch 1 oder 2,
**dadurch gekennzeichnet,**
**dass** vor dem Schritt der Infiltration ein Einweben und/oder Wiederbeschichten der Fasern durchgeführt wird.

4. Verfahren nach einem der Ansprüche 1 bis 3,
**dadurch gekennzeichnet,**
**dass** das Bauteil vor dem Schritt der Wiederherstellung der Fügung gesintert wird.

5. Verfahren nach einem der Ansprüche 1 bis 4,
**dadurch gekennzeichnet,**
**dass** das Bauteil vor dem Schritt der Wiederherstellung der Fügung beschichtet wird.

6. Verfahren nach einem der Ansprüche 1 bis 5,
**dadurch gekennzeichnet,**
**dass** nach dem Schritt der Wiederherstellung der Fügung ein Oberflächenschutz vorgesehen wird.

7. Verfahren zur Reparatur eines beschädigten und/oder gealterten Bauteils einer Strömungsmaschine, welches zumindest teilweise aus einem keramischen Verbundwerkstoff gebildet ist, mit den Schritten:
Auslaugen der Matrix und/oder mechanisches Bearbeiten des Bauteils,
Infiltration zur Wiederherstellung und/oder Erneuerung der keramischen Matrix des Bauteils und Sintern des Bauteils.

8. Verfahren nach Anspruch 7,
**dadurch gekennzeichnet,**
**dass** nach dem Schritt des Auslaugens der Matrix und vor dem Schritt der Infiltration ein Einweben und/oder Wiederbeschichten der Fasern durchgeführt wird.

9. Verfahren nach einem der vorhergehenden Ansprüche,
**dadurch gekennzeichnet,**
**dass** als Strömungsmaschine eine Gasturbine verwendet wird.

10. Verfahren nach Anspruch 9,
**dadurch gekennzeichnet,**
**dass** die Gasturbine überfeuert wird.
